# EUROPÄISCHE PATENTSCHRIFT

(11) **EP 0 764 261 B1**
(45) Veröffentlichungstag und Bekanntmachung des Hinweises auf die Patenterteilung: **11.07.2001**
(21) Anmeldenummer: 96914884.0
(22) Anmeldetag: 04.04.1996
(51) Int. Cl.: G01B 7/34, G01N 27/00

(54) **ANORDNUNG ZUR ERFASSUNG DER TOPOGRAPHIE EINER OBERFLÄCHE**
INSTRUMENT FOR DETERMINING THE TOPOGRAPHY OF A SURFACE
DISPOSITIF POUR DETECTER LA TOPOGRAPHIE D'UNE SURFACE

(30) Priorität: 10.04.1995 DE 19513529
(43) Veröffentlichungstag der Anmeldung: 26.03.1997
(73) Patentinhaber: CARL ZEISS JENA GmbH, 07745 Jena (DE)
(72) Erfinder: BARTZKE, Karlheinz, D-07747 Jena (DE); ANTRACK, Torsten, D-07745 Jena (DE); BESOCKE, Karl, D-52428 Jülich (DE); DAMMANN, Ehrhard, D-07745 Jena (DE)
(74) Vertreter: Geyer, Werner, Dr.-Ing.
(86) Internationale Anmeldenummer: EP9601497
(87) Internationale Veröffentlichungsnummer: WO9632622

(56) Entgegenhaltungen:
- EP-A- 0 290 647
- EP-A- 0 449 221
- US-A- 5 168 159
- US-A- 5 267 471
- US-A- 5 440 121
- INTERNATIONAL JOURNAL OF OPTOELECTRONICS, SEPT.-DEC. 1993, UK, Bd. 8, Nr. 5-6, ISSN 0952-5432, Seiten 669-676, XP000578636 BARTZKE K ET AL: "The needle sensor-a micromechanical detector for atomic force microscopy" in der Anmeldung erwähnt
- REVIEW OF SCIENTIFIC INSTRUMENTS, Bd. 64, Nr. 3, 1.März 1993, Seiten 694-699, XP000355654 MAECKEL R ET AL: "THE SCANNING KELVIN MICROSCOPE"
- JOURNAL OF PHYSICS B (ATOMIC, MOLECULAR AND OPTICAL PHYSICS), 28 APRIL 1993, UK, Bd. 26, Nr. 8, ISSN 0953-4075, Seiten 1509-1518, XP002010299 RAE S C ET AL: "Harmonic generation and phase matching in the tunnelling limit"

## Beschreibung

Die Erfindung betrifft eine Anordnung zur Erfassung der Topographie einer Oberfläche, mit einem schwingenden Abtastelement, das einen stabförmigen Piezoresonator umfaßt, auf dem eine Miktrotastspitze angebracht ist, ferner mit einem Piezoaktuator zum Verstellen des Abstandes zwischen der Mikrotastspitze und der Oberfläche der Probe, und mit einer Steueranordnung, die eine erste Einrichtung enthält, mit der ein Tunnelstrom zwischen der Mikrotastspitze und der Oberfläche der Probe meßbar und in Abhängigkeit davon ein Steuersignal zum Ansteuern des Piezoaktuators erzeugbar ist.

Bei der Kraftmikroskopie wird mit einer an einer mikroskopisch kleinen Lamelle angebrachten Tastspitze eine Probenoberfläche angetastet. Mittels Piezoaktuatoren wird die Probenoberfläche an der Tastspitze so vorbeigeführt, daß ein ständig. gleichbleibender Kraftkontakt zwischen Tastspitze und Probenoberfläche zustande kommt (vgl. G. Binning, C. F. Quate, Ch. Gerber, "Atomic Force Microscopy", Phys. Rev. Lett. 56 (1986), 9, 930-933).

Bei der Tunnelmikroskopie wird mittels Piezostelltechnik eine elektrisch leitfähige Tastspitze in einem Bereich von etwa 1 nm an eine leitfähige Probenoberfläche gebracht. Wird zwischen Tastspitze und Probenoberfläche eine elektrische Spannung angelegt, so beginnt ein Tunnelstrom in nA-Größenordnung zu fließen. Eine Veränderung des Spaltes zwischen Tastspitze und Probenoberfläche von z. B. 0,1 nm bewirkt eine Veränderung des Tunnelstroms um eine Größenordnung. Diese starke Abstandsabhängigkeit wird ausgenutzt, um die Tastspitze mittels Piezostelltechnik der Probenoberfläche nachzuführen (vgl. G. Binning, H. Rohrer, Ch. Gerber, E. Weibel, "Surface Studies by Scanning Tunneling Microscopy", Phys. Rev. Lett. 49 (1982), 1, 57-61). So sind zahlreiche Anordnungen und Verfahren zur Kraft- und Tunnelmikroskopie bekannt geworden.

In der EP 0 223 918 A2 ist ein Kraftmikroskop beschrieben, bei dem eine Tastspitze so weit an eine Probenoberfläche herangeführt wird, bis interatomare Kräfte auftreten. Die Tastspitze ist auf einer Mikrobiegefeder befestigt, deren Auslenkungen von einer über der Mikrobiegefeder angeordneten Tunnelspitze erfaßt, ausgewertet und piezoelektrisch kompensiert werden.

Aus der EP 0 290 647 A1 ist eine Anordnung bekannt, bei der eine Mikrotastspitze an einer Seite der Schwingflächen eines Schwingquarzes befestigt ist, der mittels zweier mit elektrischen Anschlußelementen versehenen elektrischen Erregerelektroden zur Eigenschwingung angeregt wird. Bei der Annäherung der Tastspitze an die Probenoberfläche erfolgt eine Veränderung der Schwingfrequenz, wobei diese Veränderung dazu eingesetzt werden kann, den Abstand der Spitze von der zu untersuchenden Probenoberfläche zu steuern und dabei ein Bild der Oberflächentopographie zu gewinnen.

Weiterhin wird ein kraftmikroskopischer Sensor beschrieben (K. Bartzke et al., "The needle sensor - a micromechanical detector for atomic force microscopy", Int. Joum. of Optoelectronics, 1993, Vol. 8, Nos. 5/6, 669-676), bei welchem eine Tastspitze auf einem hochfrequenten Piezoresonator befestigt ist. Die bei Annäherung der schwingenden Tastspitze an die Probenoberfläche sich am Piezoresonator ergebenden Phasenänderungen werden erfaßt und als Regelsignal einer Piezostelltechnik zugeführt, welche den Sensor der Probenoberfläche mit konstanter Meßkraft nachführt.

Es ist weiterhin eine Anordnung bekannt, die sowohl kraft- als auch tunnelmikroskopische Auswertungen ermöglicht (D. Anselmetti, Ch. Gerber, B. Michel, H.-J. Güntherodt, H. Rohrer, "Compact, combined scanning tunneling/force microscope", Rev. Sci. Instrum. 63 (5), Mai 1992, 3003-3005). Für die kraftmikroskopische Messung im Noncontact-Mode wird dabei ein Cantilever mit der Tastspitze zu Resonanzschwingungen erregt und von einem optischen System die Änderung der Cantilever-Resonanz bei Annäherung der Tastspitze an die Probenoberfläche ermittelt. Hierzu wird über ein Wallaston-Prisma die auftretende Phasenänderung zweier polarisierter Lichtstrahlen für die Messung ausgenutzt, indem mittels zweier Photodioden Intensitätsmessungen ausgeführt werden. Die Nachführung der Probenoberfläche zur Tastspitze in einem berührungsfreien Abstand erfolgt mittels eines Piezoröhrchenscanners, wobei das von dem optischen System ermittelte Meßsignal (Abstandssignal) konstant gehalten wird. Die Regelgröße des Piezoröhrchens wird ausgewertet und gibt einen Rückschluß auf die Topographie der Probenoberfläche.

Für den Fall einer tunnelmikroskopischen Messung sind Tastspitze und Cantilever elektrisch leitfähig ausgebildet und mit einem Tunnelstromverstärker verbunden. Zwischen Probenoberfläche und Tastspitze wird eine Tunnelspannung angelegt. Der zwischen Probenoberfläche und Tastspitze fließende Tunnelstrom ist stark abstandsabhängig und liegt im nA-Bereich. Die Probenoberfläche wird mittels Piezoröhrchenscanner so an der Tastspitze vorbeigeführt, daß der Tunnelstrom konstant bleibt Die Regelsignale des Piezoröhrchens ergeben ein Abbild der elektronischen Zustandsdichte der Probenoberfläche.

Auch eine gleichzeitig verlaufende, simultane Kombination von Kraft- und Tunnelmikroskopie kann mit dieser Anordnung dadurch erzielt werden, daß während der tunnelmikroskopischen Messung die kraftmikroskopischen Auslenkungen des Cantilevers von dem optischen System erfaßt und ausgewertet werden.

Bei den bekannten Anordnungen und Verfahren zur gleichzeitig verlaufenden simultanen Kombination von kraft- und tunnelmikroskopischen Messungen ist ein Cantilever erforderlich, der relativ steif sein muß, um Instabilitäten im Meßprozeß zu vermeiden. Das führt jedoch zu einer Verringerung der Empfindlichkeit bei kraftmikroskopischen Messungen. Desweiteren sind optische Systeme erforderlich, die die bei tunnelmikroskopischen Messungen durch Cantileververbiegungen auftretenden Auslenkungen erfassen und kompensieren.

Eine Anordnung zur Erfassung der Topographie einer Probenoberfläche der eingangs genannten Art ist aus der EP 0 449 221 A2 bekannt. Dort wird ein schwingendes Abtastelement in Form eines stabförmigen Piezoresonators mit einer seitlich angebrachten Mikrotastspitze eingesetzt, dem ein Piezoaktuator zugeordnet ist, mit welchem der Abstand zwischen Mikrotastspitze und der zu untersuchenden Probenoberfläche eingestellt werden kann. Dabei wird mit einer Steueranordnung gearbeitet, die einen Tunnelstrom zwischen Mikrotastspitze und zu untersuchender Probenoberfläche über die Erfassung der seitlichen Auslenkung des stabförmigen Schwingers von einer Ausgangslage aus mißt und in Abhängigkeit davon den Piezoaktuator ansteuert. Dabei wird allerdings auch angegeben, daß anstelle des dort geschilderten STM-Prinzips für die Feststellung der Auslenkung des stabförmigen Piezoschwingers auch ein Verfahren eingesetzt werden kann, bei dem man die Resonanzfrequenz des stabförmigen Schwingers mißt, dadurch dessen Auslenkung bestimmt und abhängig hiervon dann den Piezoaktuator ansteuert. Die aufgezeigte Alternative bedeutet jedoch, daß die Gesamtvonrichtung grundsätzlich nur entweder auf die eine oder auf die andere Weise arbeitet.

Ausgehend von dem geschilderten Stand der Technik liegt der Erfindung die Aufgabe zugrunde, eine Anordnung vorzuschlagen, mit der simultane kraft- und tunnelmikroskopische Messungen am gleichen Ort nacheinander oder zugleich durchgeführt werden können, bei gleichzeitiger Erhöhung der Empfindlichkeit, Vereinfachung des Meßverfahrens und Reduzierung der Störanfälligkeit.

Diese Aufgabe wird erfindungsgemäß bei einer Anordnung der eingangs genannten Art dadurch gelöst, daß der Piezoresonator als in Stablängsrichtung schwingender Stabschwinger ausgebildet ist, an dessen der Oberfläche der Probe zugewandtem Ende die Mikrotastspitze in Ausrichtung zur Stablängsrichtung angebracht ist, die Steueranordnung noch eine zweite und eine dritte Einrichtung umfaßt, deren jede ebenfalls zur Erzeugung eines Steuersignales zum Ansteuern des Piezoresonators eingerichtet ist, wobei mit der zweiten Einrichtung das Resonanzverhalten des Piezoresonators meßbar und in Abhängigkeit von Änderungen der auftretenden Schwingungsamplituden, Resonanzfrequenzen und der Phasenverschiebung ein Steuersignal erzeugbar ist, während mit der dritten Einrichtung der Anteil an Oberwellen des Tunnelstroms meßbar und in Abhängigkeit davon ein Steuersignal erzeugbar ist, und daß die Steueranordnung ferner eine Schalteinrichtung umfaßt, mittels derer das Steuersignal der ersten, der zweiten und der dritten Einrichtung dem Piezoaktuator zu dessen Ansteuerung wahlweise aufschaltbar ist.

Gemäß einer bevorzugten Weiterbildung der erfindungsgemäßen Erfindung besteht der Piezoresonator aus mindestens zwei mit elektrischen Anschlußelementen versehenen elektrischen Erregerelektroden und mindestens einer Mikrotastspitze.

Bei einer vorteilhaften Weiterbildung der Erfindung ist die auf dem Piezoresonator angeordnete Mikrotastspitze leitfähig über eine Brücke mit einer der Erregerelektroden elektrisch verbunden.

Gemäß einer weiteren vorteilhaften Ausgestaltung der Erfindung ist die auf dem Piezoresonator angeordnete Mikrotastspitze leitfähig und über eine gesonderte leitfähige elektrische Leitungsbahn mit der ersten und/oder zweiten zuschaltbaren Einrichtung verbunden.

Es ist weiterhin von Vorteil, wenn der Piezoresonator mechanisch auf den Piezoaktuator aufsteckbar ist und dabei eine elektrisch leitfähige Verbindung zwischen den elektrischen Anschlußelementen erreicht wird, um ein leichtes Auswechseln zu ermöglichen.

Bei einer weiteren vorteilhaften Ausbildung der Erfindung besteht die Mikrotastspitze wahlweise aus magnetischem oder permanentmagnetischem Material.

Mit der erfindungsgemäßen Lösung wird in einem einfachen Aufbau eine wahlweise simultane, kraft- und tunnelmikroskopische Messung am gleichen Ort nacheinander oder zugleich ermöglicht Dabei wird eine deutliche Erhöhung der Empfindlichkeit gegenüber bekannten Anordnungen sowie durch eine Vereinfachung des Aufbaus der Tasteinrichtung eine Verringerung der Beschädigung der Prüfoberfläche während des Meßvorganges und eine Steigerung der Unempfindlichkeit gegenüber mechanischen Störschwingungen erreicht

Die erfindungsgemäße Anordnung soll nachstehend anhand von Ausführungsbeispielen näher erläutert werden. Es zeigen:
- Fig. 1: eine Prinzipdarstellung einer erfindungsgemäßen Anordnung;
- Fig. 2a und 2b: Ausführungsformen eines Tastelementes, und
- Fig. 3: eine bauliche Ausführungsform eines Tastelementes.

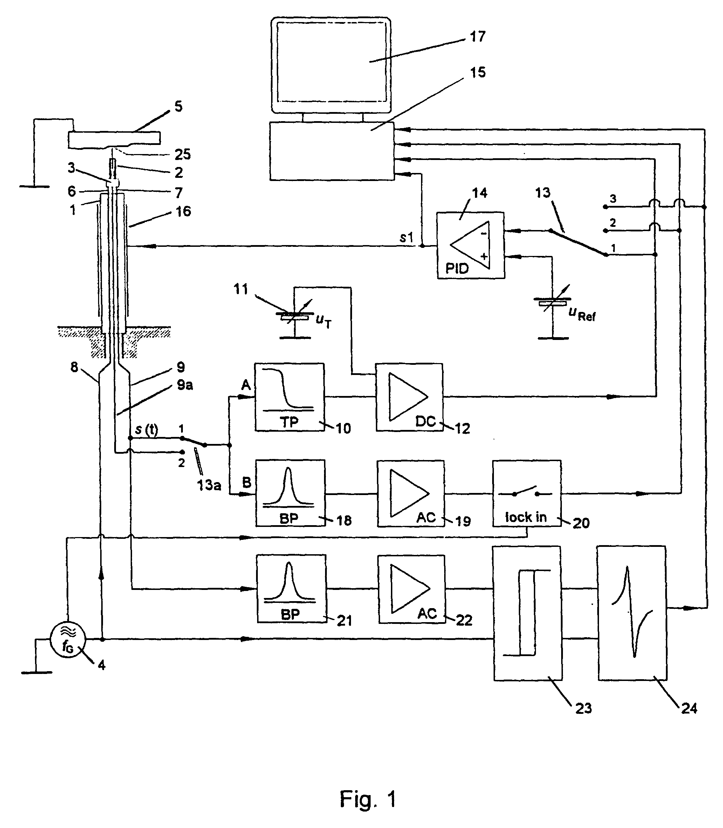

Bei der in Fig. 1 schematisch dargestellten Anordnung ist ein HF-Generator 4 über ein elektrisches Anschlußelement 8 in einem Piezoaktuator 1 über ein Anschlußelement 6 mit einem Tastelement 2 elektrisch verbunden und regt das Tastelement 2 zu Schwingungen mit einer Generatorfrequenz f_{G} von z. B. 1 MHz an. Eine elektrisch leitfähige Mikrotastspitze 25, die auf dem Tastelement 2 angeordnet ist, schwingt vor einer Probe 5. Eine Tunnelspannung U_{T} liegt über einen Tunnelgleichstromverstärker 12, einen Tiefpaß 10 und über elektrische Anschlußelemente 9 und 7 an dem mit der Mikrotastspitze 25 versehenen Tastelement 2 an.

Die Probe 5 ist in Fig. 1 mit Masse verbunden, so daß die Tunnelspannung U_{T} zwischen der Mikrotastspitze 25 und der Probe 5 anliegt.

Zwischen Probe 5 und Mikrotastspitze 25 fließt ein Tunnelstrom, der Gleich- und Wechselstromanteile aufweist. Der Wechselstromanteil besteht aus einer Grundwelle von z.B. 1 MHz, hervorgerufen durch die Schwingung des Piezoresonators 2, und aus Oberwellen, verursacht durch die Nichtlinearität der Tunnelstromkennlinie, d.h. die nichtlineare Abhängigkeit des Tunnelstromes vom Tunnelspalt. Gleichzeitig entstehen durch die Kräfte zwischen der Probe 5 und der Mikrotastspitze 25 an dem Tastelement 2 Resonanzänderungen, die z.B. Phasenänderungen zwischen der Generator- und der Piezoresonatorspannung hervorrufen, so daß am elektrischen Anschlußelement 9 ein elektrisches Signalgemisch s(t) aus Tunnelgleich- und Wechselstrom und elektrischen Phasenänderungen anliegt.

Durch den Tiefpaß 10, z. B.ein RC-Glied, werden die Gleichstromanteile des Tunnelstromes selektiert, durch den Tunnelgleichstromverstärker 12 verstärkt und einem elektrischen Schalter 13 (Stellung 1) und einem Meßauswertesystem 15 zugeführt.
Über den Schalter 13 (Stellung 1) gelangt das Signal an einen Regler 14, z. B. einen PID-Regler, der ein Reglersignal erzeugt, das an dem Meßauswertesystem 15 und an einer Piezo-Steuerelektrode 16 anliegt.

Ein elektrisch schaltbarer Bandpaß 18, z. B. eine LC-Schaltung, filtert aus dem elektrischen Signalgemisch s(t) den Oberwellenanteil des Tunnelstromes von ≥ n • f_{G} heraus, wobei n eine natürliche Zahl ≥ 2 ist. Ein Wechselstromverstärker 19 verstärkt den Oberwellenanteil des Tunnelstromes und führt das Signal einem Lock-in-Verstärker 20, einem phasenempfindlichen Verstärker, zu.

Der Lock-in-Verstärker 20 wird mit Hilfe des HF-Generators 4 im Rhythmus des n-Fachen der Generatorfrequenz f_{G} synchronisiert, so daß an seinem Ausgang das Oberwellensignal des Tunnelstromes entsteht, das in Stellung 2 des elektrischen Schalters 13 am Regler 14 und am Meßauswertesystem 15 anliegen.

Aus dem Signalgemisch s(t) wird mit einem Bandpaß 21, z. B. einer LC-Schaltung, die Grundfrequenz fG herausgefiltert, in einem nachgeordneten Wechselstromverstärker 22 verstärkt, einem Komparator 23 und einem Phasendiskriminator 24 zugeführt. Der Komparator 23 ist außerdem an den Ausgang des HF-Generators 4 angeschlossen und erzeugt aus den jeweiligen Wechselspannungssignalen Rechtecksignale, die dem Phasendiskriminator 24 zugeführt werden. Der Phasendiskriminator 24 erzeugt in Abhängigkeit von der Phasendifferenz der Rechtecksignale eine Spannung, die über den elektrischen Schalter 13 in Schalterstellung 3 dem Regler 14 und dem Meßauswertesystem 15 zugeführt wird.

Der Regler 14, z. B. ausgebildet als PID-Regler, steuert den Piezoaktuator 1 so, daß in Schalterstellung 1 des Schalters 13 der Tunnelgleichstrom, in Schalterstellung 2 des Schalters 13 der Tunnelwechselstrom und in Schalterstellung 3 die Phasendifferenz konstant bleibt.

Das Reglersignal S 1 hat, je nach Stellung des elektrischen Schalters 13, unterschiedliche Spannungswerte, die in Stellung 1 ein Ausdruck der elektronischen Zustandsdichte, in Stellung 2 ein Ausdruck der Oberflächenpotentiale und in Stellung 3 ein Ausdruck der Oberflächenkräfte der Probe sind. Das Meßauswertesystem 15 ist ein Rechner, bestückt mit A/D-Wandlern. Am Ausgang des Meßauswertesystems 15 ist eine Meßwertausgabe, z.B. ein Monitor, angeschlossen, mit dessen Hilfe die Meßwertsignale angezeigt werden.

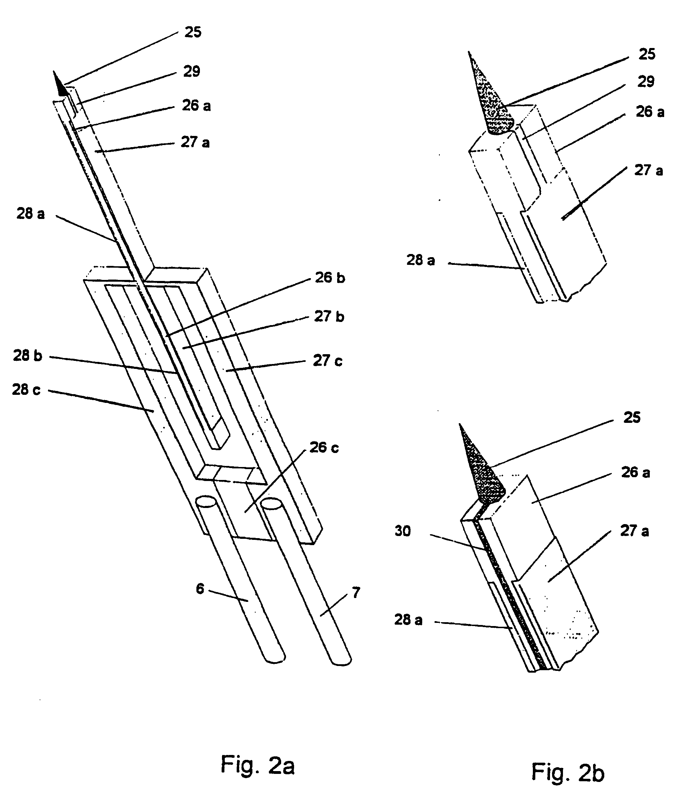

In Fig. 2a ist eine vorteilhafte Ausführungsform eines Tastelementes 2 mit der Mikrotastspitze 25 dargestellt. Bei dieser Ausführungsform besteht das Tastelement 2 aus einem stabförmigen Piezoresonator 26 a und 26 b und dem integrierten Halterungselement 26 c, das den Stabresonator im Schwingungsknoten trägt.

Die geometrischen Abmessungen der Hälften 26 a und 26 b des Piezoresonators sind vorzugsweise gleich und in einer bevorzugten Ausbildungsform als stabförmige Resonatoren ausgebildet, auf die die Erregerelektrodenhälften 27 a, b und 28 a, b aufgebracht sind.
Auf dem Halterungselement 26 c sind elektrische Leiterbahnen 27 c und 28 c aufgebracht, die mit den elektrischen Anschlußelementen 6 und 7 verbunden sind.

Die Erregerelektrode 27 a ist über eine elektrische Brücke 29 mit der Mikrotastspitze 25 elektrisch verbunden.

Die Herstellung der Erregerelektroden 27 a, 27 b, 28 a, 28 b und der elektrischen Leitungsbahn 27 c, 28 c und der elektrischen Brücke 29 zwischen der Erregerelektrode 27 a und Mikrotastspitze 25 erfolgt durch in der Elektrotechnik übliche Verfahren, z.B. mittels Vakuumbedampftechniken.

Über das elektrische Anschlußelement 6, welches über das in Fig. 1 dargestellte elektrische Anschlußelement 8 an den HF-Generator 4 angeschlossen ist, und den Eingangswiderstand des Bandpasses 21 über die elektrischen Anschlüsse 7,9 entstehen zwischen den Elektroden 27 a und 28 a, 27 b und 28 b elektrische Wechselfelder, welche die Piezoresonatoren 26 a und 26 b zu gegeneinander gerichteten mechanischen longitudinalen Schwingungen veranlassen. Damit erfolgt eine Schwingung der Mikrotastspitze 25 nach der in Fig. 1 beschriebenen Art und Weise.

Bei dem Ausführungsbeispiel gemäß Fig. 2 b ist die elektrisch leitfähige Mikrotastspitze 25 durch eine gesonderte elektrische Leitungsbahn 30 mit den Punkten A und B (dargestellt in Fig. 1) verbunden. Damit wird unter Zugrundelegung der in Fig. 1 beschriebenen Wirkungsweise der elektrischen Schaltung und der Schalterstellung 2 des Schalters 13 a über den Tiefpaß 10 und den elektrisch schaltbaren Bandpaß 18 die Auswertung des Tunnelstromes in Gleich- und Wechselstromanteilen realisiert.
Diese Anordnung gestattet auch eine Auswertung der Grundwelle (z. B. 1 MHz) des Tunnelstromes, die durch die vom HF-Generator 4 verursachten Schwingungen des Tastelementes 2 erzeugt wird.

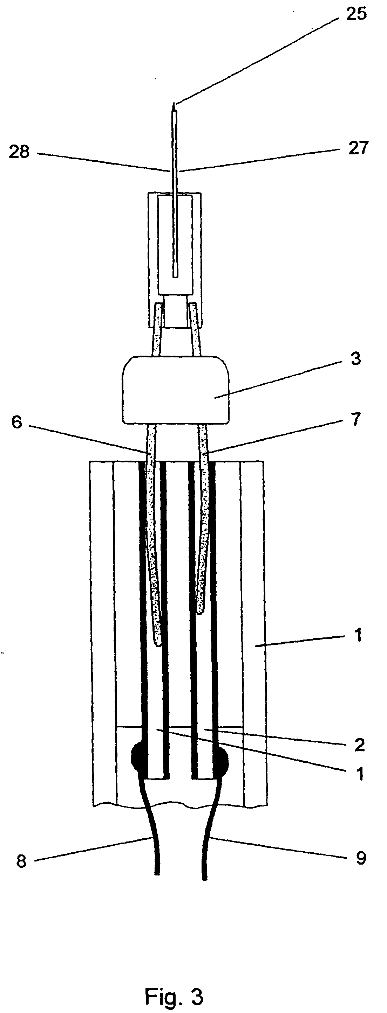

Die Fig. 3 zeigt eine weitere vorteilhafte Ausführungsform des Tastelementes 2. Ein Sockel 3 dient der vereinfachten Handhabung des Tastelementes 2. Bei dieser Ausführungsform sind die elektrischen Anschlußelemente 6, 7 des Tastelementes 2 mechanisch lösbar, z. B. als Steckverbinder, mit dem Piezoaktuator 1 über Steckkontakte elektrisch leitfähig verbunden.

Die elektrischen Anschlußelemente 6, 7 und die Steckkontakte weisen die für Steckverbinder in der Elektrotechnik üblichen Formen und Materialien auf.
- 1: Piezoaktuator
- 2: Tastelement
- 3: Sockel
- 4: HF-Generator
- 5: Probe
- 6: elektrisches Anschlußelement
- 7: elektrisches Anschlußelement
- 8: elektrisches Anschlußelement
- 9: elektrisches Anschlußelement
- 9 a: elektrisches Anschlußelement
- 10: Tiefpaß
- 11: einstellbare Gleichspannungsquelle
- 12: Tunnelgleichstromverstärker
- 13: elektrischer Schalter
- 13 a: elektrischer Schalter
- 14: Regler
- 15: Meßauswertesystem
- 16: Piezo-Steuerelektrode
- 17: Meßwertausgabe
- 18: elektrisch schaltbarer Bandpaß
- 19: Wechselstromverstärker
- 20: Lock-in-Verstärker
- 21: Bandpaß
- 22: Wechselstromverstärker
- 23: Komparator
- 24: Phasendiskriminator
- 25: Mikrotastspitze
- 26 a,b,c: Piezoresonator
- 27 a: Erregerelektroden
- 27 b: Erregerelektroden
- 27 c: elektrische Leitungsbahn
- 28 a: Erregerelektroden
- 28 b: Erregerelektroden
- 28 c: elektrische Leitungsbahn
- 29: elektrische Brücke
- 30: elektrische Leitungsbahn
- s(t): elektrisches Signalgemisch
- S 1: Reglersignal
- f_{G}: Generatorfrequenz
- U_{T}: Tunnelspannung

## Patentansprüche

1. Anordnung zur Erfassung der Topographie der Oberfläche einer Probe (5), mit einem schwingenden Abtastelement (2), das einen stabförmigen Piezoresonator umfaßt, auf dem eine Mikrotastspitze (25) angebracht ist, ferner mit einem Piezoaktuator (1) zum Verstellen des Abstandes zwischen der Mikrotastspitze (25) und der Oberfläche der Probe (5), und mit einer Steueranordnung, die eine erste Einrichtung enthält, mit der ein Tunnelstrom zwischen der Mikrotastspitze (25) und der Oberfläche der Probe (5) meßbar und in Abhängigkeit davon ein Steuersignal zum Ansteuern des Piezoaktuators (1) erzeugbar ist, **dadurch gekennzeichnet**, daß der Piezoresonator (26a, 26b, 26c) als in Stablängsrichtung schwingender Stabschwinger ausgebildet ist, an dessen der Oberfläche der Probe (5) zugewandtem Ende die Mikrotastspitze (25) in Ausrichtung zur Stablängsrichtung angebracht ist,
die Steueranordnung noch eine zweite und eine dritte Einrichtung umfaßt, deren jede ebenfalls zur Erzeugung eines Steuersignales zum Ansteuern des Piezoresonators (26a, 26b, 26c) eingerichtet ist, wobei mit der zweiten Einrichtung das Resonanzverhalten des Piezoresonators (26a, 26b, 26c) meßbar und in Abhängigkeit von Änderungen der auftretenden Schwingungsamplituden, Resonanzfrequenzen und der Phasenverschiebungen ein Steuersignal erzeugbar ist, während mit der dritten Einrichtung der Anteil an Oberwellen des Tunnelstroms meßbar und in Abhängigkeit davon ein Steuersignal erzeugbar ist,
und daß die Steueranordnung femer eine Schalteinrichtung (13) umfaßt, mittels derer das Steuersignal (s1) der ersten, der zweiten oder der dritten Einrichtung dem Piezoaktuator (1) zu dessen Ansteuerung wahlweise aufschaltbar ist.

2. Anordnung nach Anspruch 1, dadurch gekennzeichnet, daß der Piezoresonator (26a, 26b, 26c) aus mindestens zwei mit elektrischen Anschlußelementen (6, 7) versehenen elektrischen Erregerelektroden (27a, 27b, 28a, 28b) und mindestens einer Mikrotastspitze (25) besteht.

3. Anordnung nach Anspruch 1 oder 2, dadurch gekennzeichnet, daß die auf dem Piezoresonator (26a, 26b, 26c) angeordnete Mikrotatspitze (25) leitfähig ist und mit einer der Erregerelektroden (27a, 27b, 27c oder 28a, 28b, 28c) über eine Brücke (29) elektrisch verbunden ist.

4. Anordnung nach Anspruch 1 oder 2, dadurch gekennzeichnet, daß die auf dem Piezoresonator (26a, 26b, 26c) angeordnete Mikrotastspitze (25) leitfähig und über eine gesonderte leitfähige elektrische Leitungsbahn (30) mit der ersten und/oder zweiten zuschaltbaren Einrichtung verbunden ist.

5. Anordnung nach einem der Ansprüche 3 bis 4, dadurch gekennzeichnet, daß der Piezoresonator (26a, 26b, 26c) auf den Piezoaktuator (1) mechanisch aufsteckbar ist und dabei eine elektrisch leitfähige Verbindung zwischen den elektrischen Anschlußelementen (6 und 8, 7 und 9) erreicht wird.

6. Anordnung nach einem der Ansprüche 1 bis 5, dadurch gekennzeichnet, daß die Mikrotastspitze (25) aus magnetischem oder permanent magnetischem Material besteht.

## Claims

1. An arrangement for determining the topography of the surface of a sample (5), comprising an oscillating scanning element (2) containing a rod-shaped piezo-resonator on which a micro-scanning tip (25) is mounted, also comprising a piezo-actuator (1) for adjusting the distance between the micro-scanning tip (25) and the surface of the sample (5), and comprising a control arrangement containing a first device for measuring a tunnel current between the micro-scanning tip (25) and the surface of the sample (5) and generating a control signal in dependence thereon for actuating the piezo-actuator (1), characterised in that the piezo-resonator (26a, 26b, 26c) is in the form of a rod oscillator oscillating in the longitudinal direction of the rod, the micro-scanning tip (25) being mounted on the end of the oscillator facing the surface of the sample (5) and in alignment with the longitudinal direction of the rod,
the control arrangement also comprises a second and a third device, each likewise being designed to generate a control signal for actuating the piezo-resonator (26a, 26b, 26c), the second device measures the resonance behaviour of the piezo-resonator (26a, 26b, 26c) and generates a control signal in dependence on changes in the voltage amplitudes, resonance frequencies and phase shifts, and the third device measures the proportion of harmonics in the tunnel current and generates a control signal in dependence thereon, and
the control arrangement also comprises a switch means (13) for connecting the control signal (s1) as required from the first, second or third device to the piezo-actuator (1) in order to actuate it.

2. An arrangement according to claim 1, characterised in that the piezo-resonator (26a, 26b, 26c) comprises at least one micro-scanning tip (25) and at least two excitation electrodes (27a, 27b, 28a, 28b) provided with electric connecting elements (6, 7).

3. An arrangement according to claim 1 or 2, characterised in that the micro-scanning tip (25) disposed on the piezo-resonator (26a, 26b, 26c) is conductive and electrically connected to one of the excitation electrodes (27a, 27b, 27c) or (28a, 28b, 28c) via a bridge (29).

4. A device according to claim 1 or 2, characterised in that the micro-scanning tip (25) disposed on the piezo-resonator (26a, 26b, 26c) is conductive and connected by a separate conductive electric conductor (30) to the first and/or second switchable device.

5. An arrangement according to claim 3 or 4, characterised in that the piezo-resonator (26a, 26b, 26c) can be mechanically mounted on the piezo-actuator (1), thus making an electrically conductive connection between the electric connecting elements (6 and 8, 7 and 9).

6. An arrangement according to any of claims 1 to 5, characterised in that the micro-scanning tip (25) is of magnetic or permanently magnetic material.

## Revendications

1. Dispositif destiné à détecter la topographie de la surface d'un échantillon (5), comportant un élément de balayage (2) oscillant, qui comprend un piézo-résonateur en forme de barre, sur lequel est fixée une pointe de micro-balayage (25), comportant en outre un piézo-actionneur (1) pour régler la distance entre la pointe de micro-balayage (25) et la surface de l'échantillon (5), et comportant un dispositif de commande qui contient un premier équipement au moyen duquel on peut mesurer un courant tunnel entre la pointe de micro-balayage (25) et la surface de l'échantillon (5) et on peut mesurer, en fonction de celui-ci, un signal de commande destiné à commander le piézo-actionneur (1), caractérisé en ce que le piézo-résonateur (26a, 26b, 26c) est conformé en oscillateur à barre, oscillant dans le sens de la longueur de la barre, dont l'extrémité, tournée vers la surface de l'échantillon (5), porte la pointe de micro-balayage (25), orientée dans le sens de la longueur de la barre,
que le dispositif de commande comporte encore un deuxième et un troisième équipements dont chacun est aménagé également pour produire un signal de commande du piézo-résonateur (26a, 26b, 26c), le deuxième équipement permettant de mesurer le comportement en résonance du piézo-résonateur (26a, 26b, 26c) et de produire un signal de commande en fonction de variations des amplitudes d'oscillation, des fréquences de résonance et des déphasages qui se produisent, tandis qu'au moyen du troisième équipement on peut mesurer la fraction d'ondes harmoniques du courant tunnel et produire un signal de commande en fonction de ceci,
et en ce que le dispositif de commande comprend encore un dispositif de commutation (13) au moyen duquel le signal de commande (s1) du premier, du deuxième ou du troisième équipements peut être envoyé au choix au piézo-actionneur (1), en vue de sa commande.

2. Dispositif selon la revendication 1, caractérisé en ce que le piézo-résonateur (26a, 26b, 26c) est constitué d'au moins deux électrodes d'excitation électriques (27a, 27b, 28a, 28b), pourvues d'éléments de connexion électrique (6, 7), et d'au moins une pointe de micro-balayage (25).

3. Dispositif selon la revendication 1 ou 2, caractérisé en ce que la pointe de micro-balayage (25) disposée sur le piézo-résonateur (26a, 26b, 26c) est conductrice et est reliée électriquement à l'une des électrodes d'excitation (27a, 27b, 27c) ou (28a, 28b, 28c), par l'intermédiaire d'un pont (29).

4. Dispositif selon la revendication 1 ou 2, caractérisé en ce que la pointe de micro-balayage (25), disposée sur le piézo-résonateur (26a, 26b, 26c), est conductrice et est reliée, par l'intermédiaire d'un ruban électrique (30) conducteur séparé, au premier et/ou au deuxième équipement qui peut être mis en circuit.

5. Dispositif selon l'une des revendications 3 ou 4, caractérisé en ce que le piézo-résonateur (26a, 26b, 26c) peut être emboîté mécaniquement sur le piézo-actionneur (1) et en ce qu'on obtient dans ce cas une liaison électriquement conductrice entre les éléments de connexion électrique (6) et (8), (7) et (9).

6. Dispositif selon l'une des revendications 1 à 5, caractérisé en ce que la pointe de micro-balayage (25) est en matière magnétique ou magnétique permanente.
